# FASCICULE DE BREVET EUROPEEN

(11) **EP 0 360 237 B1**
(45) Date de publication et mention de la délivrance du brevet: **12.01.1994**
(21) Numéro de dépôt: 89117370.0
(22) Date de dépôt: 20.09.1989
(51) Int. Cl.: H02B 1/20

(54) **Système de distribution électrique à basse tension**
Elektrisches Niederspannungsverteilsystem
Low voltage electrical distribution system

(30) Priorité: 21.09.1988 FR 8812329
(43) Date de publication de la demande: 28.03.1990
(73) Titulaire: GEC ALSTHOM SA, 75116 Paris (FR)
(72) Inventeur: Cournet, Georges, F-71100 Châlon-sur-Saône (FR); Genelot, Jean-Pierre, F-71380 Saint Marcel (FR)
(74) Mandataire: Weinmiller, Jürgen

(56) Documents cités:
- US-A- 4 366 528
- US-A- 4 419 715

## Description

La présente invention concerne un système de distribution électrique à basse tension.

On connait de nombreux dispositifs de distribution électrique à basse tension. L'art antérieur dans ce domaine technique peu être illustré par exemple par le brevet américain n^{o} 3.219.887 qui décrit une structure de distribution électrique comprenant un jeu de trois barres triphasées horizontales coopérant avec six barres verticales sur lesquelles peuvent s'embrocher, dos à dos, des tiroirs de distribution ou des appareils électriques.

Dans ce dispositif, le nombre de pièces à assembler par soudage ou vissage est assez important.

On connaît, par le document US-A-4.366.528, un dispositif de distribution comprenant des barres de distribution verticales, à section en H, coopérant avec des barres horizontales.

Les barres verticales sont maintenues par des profilés métalliques revêtus d'epoxy et vissées au moyen de vis et rondelles isolantes.

Ce mode d'isolation est onéreux.

Un but de l'invention est de réaliser un dispositif de distribution avec barres verticales, à section en H, permettant d'assurer l'isolation électrique à un coût moindre.

Un autre but de l'invention est de réaliser un système de distribution permettant de raccorder des équipements fixes, des équipements connectables et des équipements débrochables.

Un autre but de l'invention est de réaliser un dispositif permettant la connexion d'un maximum d'appareils dans un minimum de place.

Ces buts sont atteints par l'installation telle qu'elle est définie par la revendication 1.

En ce qui concerne des exemples de mise en oeuvre préférée de l'invention, référence est faite aux revendications secondaires.

Un exemple préféré de réalisation de l'invention est décrit ci-après en référence au dessin annexé dans lequel :
- la figure 1 est une section du conducteur vertical et de sa gaine d'isolation,
- les figures 2 et 3 sont des vues respectivement en bout et en élévation d'une vis utilisée pour la connexion électrique du conducteur de la figure 1,
- la figure 4, est une vue en perspective d'un étrier utilisé pour la connexion électrique du conducteur de la figure 1,
- la figure 5 est une vue partielle en élévation d'une installation comprenant 4 conducteurs du type précité,
- la figure 6 est une vue de dessus de la même installation,
- la figure 7 est une vue partielle de dessus d'une installation équipée à la fois d'appareils fixes, d'appareils connectables et d'appareils débrochables.

Les buts que se propose d'atteindre l'invention sont obtenus grâce à la forme particulière donnée aux conducteurs verticaux.

Les conducteurs sont disposés côte à côte par groupes de trois ou quatre dans des installations triphasées selon le type de montage du circuit.

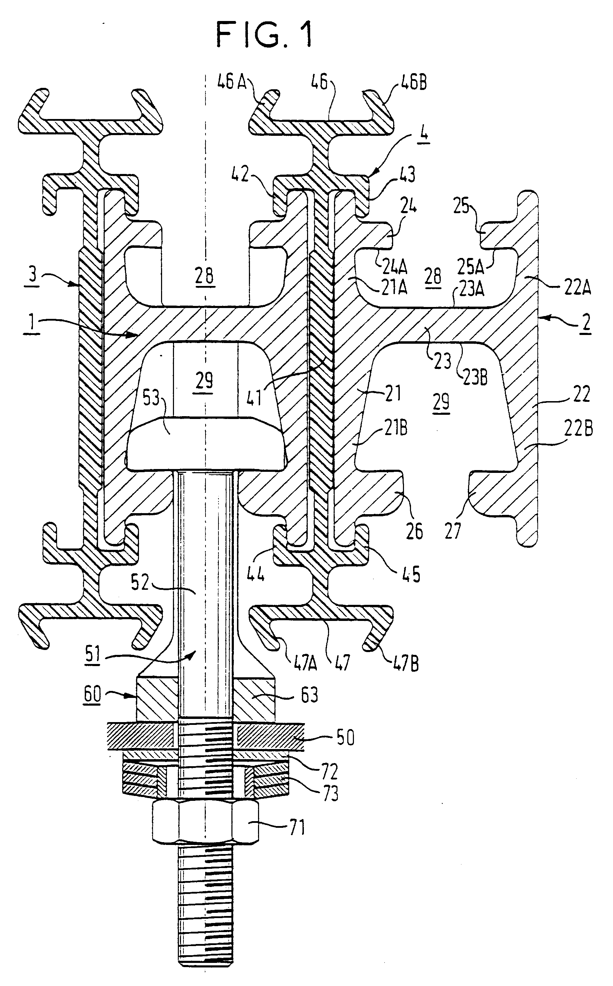

La figure 1 montre, en section, deux conducteurs voisins 1 et 2 munis de leurs gaines d'isolation 3 et 4.

Un conducteur, de préférence en cuivre électrolytique, a une section en H avec deux branches parallèles 21, 22 réunies par une branche transversale 23. La branche transversale n'est pas médiane mais divise les branches parallèles 21 et 22 en une portion courte (21 A, 22 A) et une portion longue (21B, 22B). La portion longue a une longueur à peu près double de celle de la portion courte.

Les branches 21A et 22A définissent, avec la branche transversale 23, un espace ouvert 28. Deux saillies 24 et 25 possèdent, du côté de la branche transversale, des portions de surfaces planes servant d'appui à des dispositifs de fixations fixes. La branche transversale possède une portion de surface plane 23A servant de surface de contact électrique fixe.

Les branches 21B et 22B définissent, avec la branche transversale 23, un espace ouvert 29. Des saillies 26 et 27 servent de surface de contact électrique glissant à des appareils connectables ainsi qu'à des appareils débrochables. La branche transversale possède une portion de surface plane 23B servant de surface de contact électrique fixe.

Les conducteurs sont isolés entre eux et avec le reste de l'installation par des gaines. La gaine 4 est décrite en détail.
La section de la gaine, visible dans la figure 1, montre une portion allongée 41, venant séparer les branches parallèles et voisines de deux conducteurs adjacents 1 et 2.
La section de la gaine comprend quatre portions repliées à angle droit 42, 43, 44, 45 destinées à enserrer les extrémités des branches des conducteurs 1 et 2. La portion allongée est terminée à chaque extrémité, par une portion à angle droit 46, 47 avec des pattes obliques 46A, 46B, 47A, 47B.
Le rôle de ces pattes sera explicité plus loin.
La gaine est réalisée par extrusion d'une matière plastique.

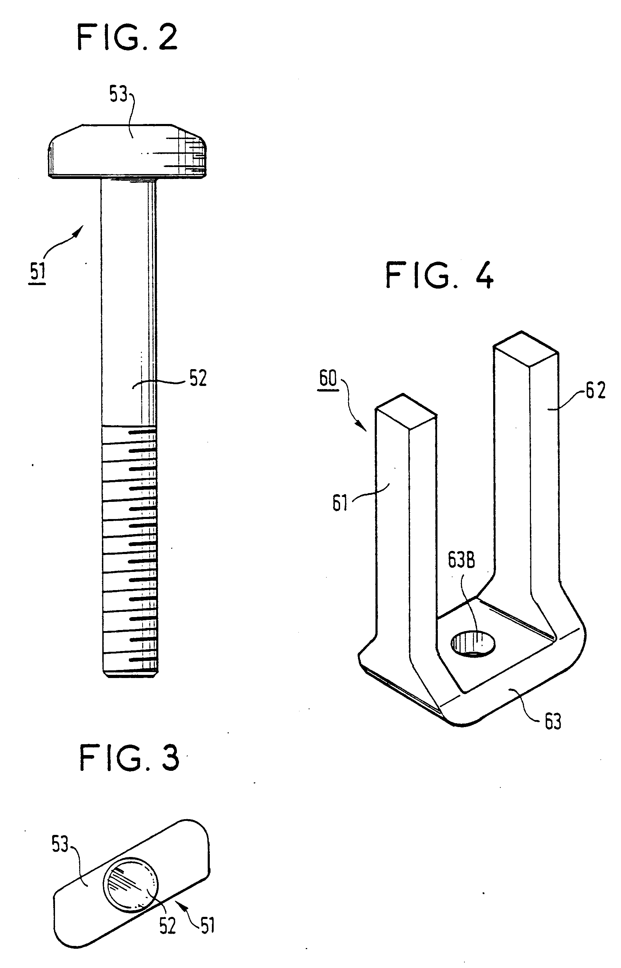

La figure 1 montre un exemple de connexion électrique du conducteur 1 à un élément de connexion 50 d'un appareillage ou à un bus d'alimentation ; munie d'un trou cette connexion est réalisée au moyen d'une vis 51 ayant une tige 52 partiellement filetée et une tête 53 allongée (voir figures 2 et 3), coopérant avec un étrier 60 ayant deux branches 61 et 62 reliées par une base 63 ayant une surface 63 A plane (voir figure 4, ) et percée d'un trou 63 B pour le passage de la vis.

L'ensemble vis-étrier est monté comme indiqué dans la figure 1 et serré par un écrou 71 et des rondelles 72 et 73.

Bien entendu, le mode de connexion qui vient d'être décrit n'est qu'un exemple et les éléments utilisés peuvent présenter des formes et dimensions différentes, notamment en fonction de l'intensité nominale de l'installation.

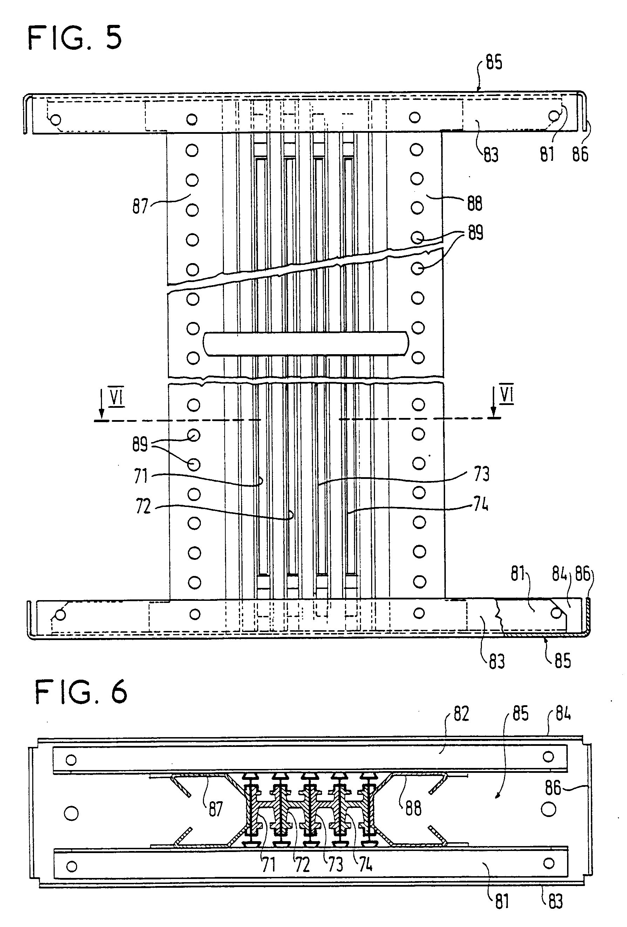

Les figures 5 et 6 montrent comment les conducteurs sont assemblés.
Quatre conducteurs 71, 72, 73, 74, solidarisés deux à deux par leurs gaines isolantes, sont disposées verticalement et enserrées en haut et en bas par des cornières 81, 82, 83, 84 , soudées deux par deux, en haut et en bas à des plaques 85 et 86.

Les profilés s'appuient sur les extrémités des gaines isolantes ; l'isolement électrique entre les conducteurs et les éléments de support est assuré par les pattes d'extrémités des gaines.

Les conducteurs sont en outre serrés uniformément les uns contre les autres sur toute leur longueur, par deux profilés verticaux 87 et 88, munis de trous 89 et soudés aux cornières. L'ensemble est ainsi robuste, autoporteur, avec un isolement sûr.

On peut utiliser des conducteurs ayant une longueur atteignant plusieurs mètres, ce qui permet d'y fixer ou embrocher un grand nombre d'équipements.

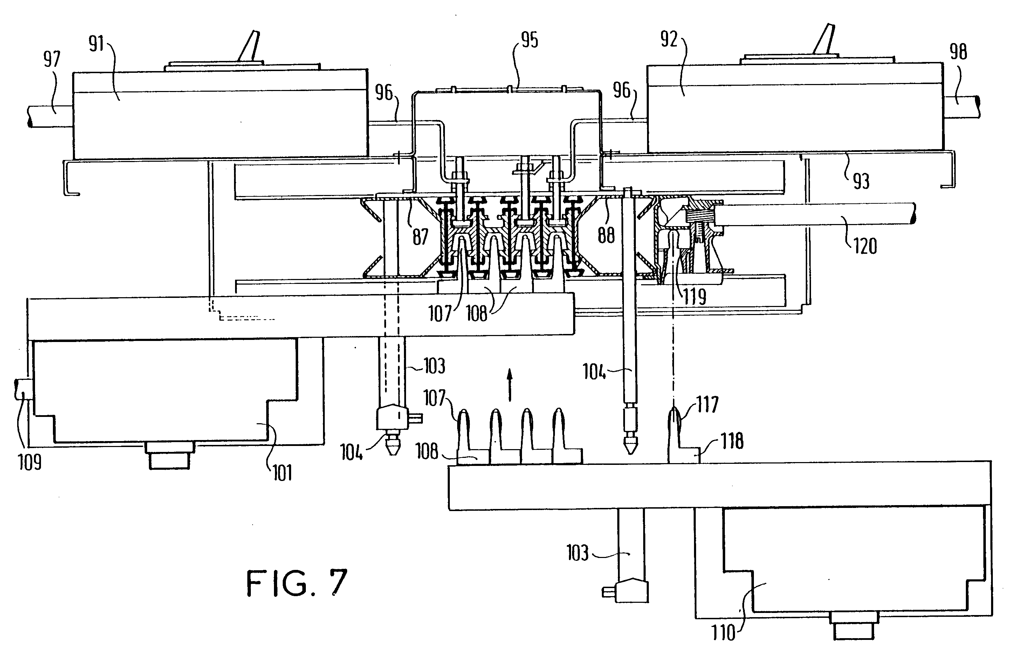

La figure 7 est une vue partielle d'une installation munie à la fois d'équipements fixes, d'équipements connectables et d'équipements débrochables. Deux équipements 91 et 92, représentent les équipements fixes.
Le jeu de quatre conducteurs verticaux, conforme à ce qui a été décrit en référence aux figures 5 et 6, est placé dans un chassis métallique 93. Les équipements 91 et 92 sont fixés sur une platine perforée de manière classique ; les connexions électriques des disjoncteurs au jeu de conducteur se font côté amont. Un capot protecteur 95 interdit un accès aux conducteurs de liaison 96. Les câbles de sorties des appareils sont référencés 97 et 98.

L'installation comprend également une rangée d'équipements connectables tel que 101. L'appareil 101 est muni de guides 103 pour le passage de tringles 104, traversant les trous 89 des profilés 87 et 88, permettent de supporter les équipements. La connexion électrique se fait, côté amont, à l'aide de contacts élastiques tel que 107, placés dans des boitiers en plastique tel que 108 ; comme on le voit, les contacts sont déportés par rapport aux appareils de telle sorte qu'à un niveau donné, on peut embrocher deux appareils placés tête-bêche. On peut ainsi placer un nombre important d'équipements dans un volume réduit. La référence 109 désigne le câble de liaison de l'équipement.

L'installation peut recevoir aussi des équipements débrochables tel que l'équipement 110. Comme l'équipement connectable, l'équipement débrochable 110 comprend des guides 103 pour recevoir des tringles 104, et des contacts élastiques 107 coopérant avec les conducteurs verticaux. L'équipement est équipé côté amont de contacts 117 portés par un boitier 118, et coopérant avec une cage à pinces 119 fixée sur le châssis 93 et à laquelle est relié, côté aval, le câble de sortie 120.

Les installations qu'on peut réaliser selon l'invention sont modulaires.
Elles permettent de recevoir des équipements fixes, connectables et/ou débrochables.

Un même groupe de conducteurs verticaux peut recevoir deux rangées verticales d'appareils, ce qui constitue une compacité remarquable du système.
Les appareils peuvent être :
- contacteurs avec relais,
- disjoncteurs, de préférence en boîtier moulé et modulaire,
- sectionneur avec fusible,
- interrupteur,
ainsi que tout le matériel nécessaire au pilotage des actionneurs et à la protection de la distribution.

Typiquement, le calibre du jeu de conducteur peut être de 800 Ampères avec une tension d'isolement de 1000 V.
En version débrochable, l'équipement possède un pouvoir de coupure occasionnel obtenu par décalage des contacts amont et aval.
La coupure s'opère donc sans effet côté jeu de barres.

## Revendications

1. Installation de distribution électrique à basse tension du type comprenant au moins un jeu de conducteurs verticaux reliés électriquement, d'une part à un jeu de barres d'alimentation et, d'autre part, à des appareillages d'équipement, chaque conducteur vertical étant un profilé ayant en section la forme d'un H, comprenant une première (21) et une seconde (22) branches parallèles réunies par une branche transversale (23), les extrémités desdites branches parallèles étant munies de saillies (24, 25, 26, 27) se faisant face deux à deux, caractérisée en ce qu'un conducteur vertical est isolé du conducteur voisin au moyen d'une gaine (4) ayant en section une portion allongée (41) pouvant s'étendre entre deux branches parallèles de deux conducteurs adjacents, la section de ladite gaine comprenant quatre portions à angle droit (42, 43, 44, 45) enserrant les extrémités des branches de deux conducteurs adjacents.

2. Installation selon la revendication 1, caractérisée en ce que ladite portion allongée est terminée, à chaque extrémité, par une portion à angle droit (46, 47) munie de pattes obliques (46A, 46B, 47A, 47B).

3. Installation selon l'une des revendications 1 à 2, caractérisée en ce que toute connexion électrique fixe entre un conducteur vertical et un conducteur d'alimentation ou d'appareillage est effectuée au moyen d'une vis (51) à tête (53) allongée coopérant avec un étrier métallique (60).

4. Installation selon l'une des revendications 1 à 3, caractérisée en ce que ladite branche transversale (23) réunissant les deux branches définit, dans le conducteur, deux espaces ouverts (28, 29) de volume inégal.

5. Installation selon l'une des revendications 1 à 4, caractérisée en ce que tout équipement connectable est muni de contacts élastiques (107) introduits dans le conducteur vertical, entre les saillies (26A, 27A) de l'espace (29) de plus grand volume.

6. Installation selon l'une des revendications 1 à 5, caractérisée en ce que tout équipement débrochable est muni d'une part de contacts élastiques (107) introduits dans le conducteur vertical, entre les saillies (26A, 27A) de l'espace (29) de plus grand volume et, d'autre part, de couteaux (117) coopérant avec une cage à pince (119) à laquelle est relié le câble de sortie (120).

7. Installation selon l'une des revendications 1 à 6, caractérisée en ce qu'à un même groupe de conducteurs verticaux sont connectées deux rangées (101, 102) verticales d'équipements, par des connexions déportées.

## Claims

1. A low voltage electrical distribution installation of the type comprising at least one set of vertical conductors connected electrically, both to a set of power busbars and to pieces of equipment, each vertical conductor being a bar of H cross-section, comprising first (21) and second (22) parallel limbs linked by a transverse limb (23), the ends of said parallel limbs being provided with protrusions (24, 25, 26, 27) facing one another in pairs, the installation being characterized in that a vertical conductor is insulated from a neighboring conductor by a sheath (4) having in section an elongate portion (41) which extends between the two parallel branches of two adjacent conductors, the cross-section of said sheath comprising four right-angle portions (42, 43, 44, 45) gripping the ends of the limbs of two adjacent conductors.

2. Installation according to claim 1, characterized in that said elongate portion is terminated at each end by a right-angle portion (46, 47) provided with oblique lugs (46A, 46B, 47A, 47B).

3. Installation according to claim 1 or 2, characterized in that a fixed electrical connection between a vertical conductor and a power conductor or a piece of equipment is provided solely by means of a screw (51) with an elongate head (53) co-operating with a metal clamp (60).

4. Installation according any one of claims 1 to 3, characterized in that said transverse limb (23) linking together the two limbs defines two open spaces (28, 29) of unequal volume inside the conductor.

5. Installation according to any one of claims 1 to 4, characterized in that any piece of connectable equipment is provided with resilient contacts (107) inserted into the vertical conductor between the protrusions (26A, 27A) in the space (29) of larger volume.

6. Installation according to any of claims 1 to 5, characterized in that any piece of removable equipment is provided both with resilient contacts (107) inserted into the vertical conductor between the protrusions (26A, 27A) of the space (29) of larger volume, and also with blades (117) co-operating with a terminal box (119) to which the output cable (120) is connected.

7. Installation according to any of claims 1 to 6, characterized in that two vertical rows (101, 102) of equipment are connected to the same group of vertical conductors, by offset connections.

## Patentansprüche

1. Elektrische Niederspannungsverteilungsanlage, die mindestens eine Gruppe senkrechter Leiter aufweist, die elektrisch einerseits an eine Gruppe von Versorgungsschienen, und andererseits an Ausrüstungsgeräte angeschlossen sind, wobei jeder senkrechte Leiter ein Profilelement mit H-förmigem Querschnitt bildet, das einen ersten (21) und einen zweiten (22) parallelen Schenkel aufweist, welche durch einen Quersteg (23) miteinander verbunden sind, wobei die Enden der parallelen Schenkel mit Vorsprüngen (24, 25, 26, 27) versehen sind, die paarweise einander gegenüberstehen, dadurch gekennzeichnet, daß ein senkrechter Leiter gegen den benachbarten Leiter durch eine Hülle (4) isoliert ist, die einen im Querschnitt langgestreckten (41) Abschnitt besitzt, der sich zwischen zwei parallele Schenkel zweier benachbarter Leiter erstrecken kann, wobei der Querschnitt der Hülle vier rechtwinklige Abschnitte (42, 43, 44, 45) umfaßt, die die Enden der Schenkel der beiden benachbarten Leiter umgreifen.

2. Anlage nach Anspruch 1, dadurch gekennzeichnet, daß der langgestreckte Abschnitt an jedem Ende mit einem rechtwinkligen Abschnitt (46, 47) abschließt, der mit schrägen Klauen (46A, 46B, 47A, 47B), versehen ist.

3. Anlage nach Anspruch 1 oder 2, dadurch gekennzeichnet, daß jeder feststehende elektrische Anschluß zwischen einem senkrechten Leiter und einem Versorgungsleiter bzw. einem Geräteleiter durch eine Schraube (51) mit länglichem Kopf (53) hergestellt wird, der mit einem Metallbügel (60) zusammenwirkt.

4. Anlage nach einem der Ansprüche 1 bis 3, dadurch gekennzeichnet, daß der die beiden Schenkel verbindende Quersteg (23) im Leiter zwei offene Räume (28, 29) unterschiedlichen Volumens definiert.

5. Anlage nach einem der Ansprüche 1 bis 4, dadurch gekennzeichnet, daß jede anschließbare Einrichtung mit elastischen Kontakten (107) versehen ist, die in die senkrechten Leiter zwischen den Vorsprüngen (26A, 27A) des Raumes (29) mit dem größeren Volumen eingeführt werden.

6. Anlage nach einem der Ansprüche 1 bis 5, dadurch gekennzeichnet, daß jede abziehbare Einrichtung einerseits mit elastischen Kontakten (107), die in die senkrechten Leiter zwischen den Vorsprüngen (26A, 27A) des Raumes (29) mit dem größeren Volumen eingeführt werden, und andererseits mit Messern (117) versehen sind, die mit einem Klemmengehäuse (119) zusammenwirken, an das das Ausgangskabel (120) angeschlossen ist.

7. Anlage nach einem der Ansprüche 1 bis 6, dadurch gekennzeichnet, daß an eine Gruppe senkrechter Leiter durch versetzte Anschlüsse zwei senkrechte Reihen (101, 102) von Geräten angeschlossen sind.
